# EUROPÄISCHE PATENTSCHRIFT

(11) **EP 2 755 804 B1**
(45) Veröffentlichungstag und Bekanntmachung des Hinweises auf die Patenterteilung: **06.01.2021**
(21) Anmeldenummer: 12753146.5
(22) Anmeldetag: 03.09.2012
(51) Int. Cl.: B25F 5/02

(54) **MOTORISCH BETRIEBENE WERKZEUGMASCHINE**
MOTOR OPERATED MACHINE TOOL
MACHINE OUTIL MOTORISÉE

(30) Priorität: 15.09.2011 DE 102011082787
(43) Veröffentlichungstag der Anmeldung: 23.07.2014
(73) Patentinhaber: Robert Bosch GmbH, 70442 Stuttgart (DE)
(72) Erfinder: NAGY, Attila, H-3521 Miscolc-Slirma (HU)
(86) Internationale Anmeldenummer: PCT/EP2012/067087
(87) Internationale Veröffentlichungsnummer: WO 2013/037653

(56) Entgegenhaltungen:
- WO-A1-2008/074536
- DE-A1- 10 013 984
- US-A- 4 604 005
- US-A- 5 022 131
- US-A- 5 346 453
- US-A- 5 597 275

## Beschreibung

### Stand der Technik

Die Erfindung betrifft eine motorisch betriebene Werkzeugmaschine nach dem Oberbegriff des Anspruchs 1.

Eine derartige Werkzeugmaschine ist aus der DE 10 2006 059 688 A1 der Anmelderin bekannt. Die bekannte Werkzeugmaschine weist ein Werkzeugwechselmagazin mit Werkzeugkammern für jeweils ein Werkzeug auf, das in einer Achse innerhalb des Gehäuses der Werkzeugmaschine drehbar angeordnet ist, wobei die Werkzeugkammern jeweils in eine Übergabelage an eine zu bestückende Werkzeugaufnahme der Werkzeugmaschine verstellbar sind. Die Übergabe eines Werkzeugs aus einer Werkzeugkammer in die Werkzeugaufnahme bzw. aus der Werkzeugaufnahme zurück in eine Werkzeugkammer erfolgt mittels eines Schieberelements, das auf der dem Werkzeug zugewandten Seite beispielsweise magnetisch ausgebildet ist. Wesentlich dabei ist, dass das Schieberelement in der Betriebsstellung der Werkzeugmaschine, bei der das in der Werkzeugaufnahme befindliche Werkzeug zum Beispiel zum Einschrauben einer Schraube angetrieben ist, sich das Werkzeug an dem Schieberelement abstützen kann, so dass das Schieberelement ein Gegenlager für das Werkzeug ausbildet. Hierzu ist es beim Stand der Technik vorgesehen, dass das Schieberelement mittels eines Verriegelungsmechanismus festsetzbar ist. Das Betätigen des Verriegelungsmechanismus erfolgt mittels eines separaten Bedienelements, das vom Bedienelement zur Betätigung des Schieberelements getrennt ist. Somit ist für die Einleitung eines Werkzeugwechsels die Betätigung zweier Bedienelemente erforderlich, wozu ein Bediener beide Hände benutzen muss: Mittels der einen Hand wird über das eine Bedienelement der Feststellmechanismus des Schieberelements deaktiviert, während mit der anderen Hand bei deaktiviertem Feststellmechanismus das andere Bedienelement das Schieberelement betätigt und das Werkzeug aus der Werkzeugaufnahme in die entsprechende Werkzeugkammer des Werkzeugwechselmagazins überführt. Andere Beispiele sind aus der WO2008074536A1, US5022131 A oder US5597275A bekannt.

### Offenbarung der Erfindung

Ausgehend von dem dargestellten Stand der Technik liegt der Erfindung die Aufgabe zugrunde, eine motorisch betriebene Werkzeugmaschine nach dem Oberbegriff des Anspruchs 1 derart weiterzubilden, dass ein Werkzeugwechsel dahingehend vereinfacht wird, dass lediglich ein einziges Bedienelement erforderlich ist, um einen Werkzeugwechsel auszuführen. Dies hat den Vorteil, dass ein Bediener zum Werkzeugwechsel lediglich eine Hand benötigt, so dass die andere Hand beispielsweise sehr gut zum Abstützen der Werkzeugmaschine während des Werkzeugwechsels verwendet werden kann. Diese Aufgabe wird erfindungsgemäß bei einer Werkzeugmaschine mit den Merkmalen des Anspruchs 1 dadurch gelöst, dass das Schieberelement zum Verstellen des Blockierelements mittels des Übertragungselements in zumindest mittelbarem Anlagekontakt mit dem Blockierelement angeordnet ist. Insbesondere steht das Übertragungselement zur Verstellung von der zweiten in die erste Position in Wirkverbindung mit dem Bedienelement.

Die erfindungsgemäße Lösung hat den Vorteil, dass nur ein einziges manuell betätigbares Bedienelement zum Werkzeugwechsel notwendig ist. Mittels des einen Bedienelements lässt sich die Werkzeugmaschine von der Betriebsstellung (zweite Position) in die Außerbetriebsstellung (erste Position) verstellen. Das einzige Bedienelement hat dabei eine Doppelfunktion: zum einen das Schieberelement von der zweiten in die erste Position zu verstellen, zum anderen das Blockierelement außer Wirkverbindung mit dem Schieberelement zu bringen (Entriegelung des Blockierelements). Es ist insbesondere kein separates Bedienelement zur Entriegelung des Blockierelements erforderlich. Dies macht es insbesondere möglich, die Werkzeugmaschine mit einer Hand zu bedienen.

Vorteilhafte Weiterbildungen der erfindungsgemäßen Werkzeugmaschine sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In bevorzugter konstruktiver Ausgestaltung der Erfindung wird vorgeschlagen, dass das Blockierelement einen dem Schieberelement zugewandten Endbereich aufweist, der in der zweiten Position gegen das Schieberelement, vorzugsweise gegen die dem Blockierelement zugewandte Stirnseite des Schieberelements, anliegt.

Um eine Beweglichkeit des Schieberelements zum Überführen eines Werkzeugs aus der Werkzeugaufnahme zu ermöglichen, ist darüber hinaus bei der zuletzt genannten Variante vorgesehen, dass das Blockierelement zum Verstellen von der zweiten Position in die erste Position und umgekehrt positionsveränderbar angeordnet ist, derart, dass in der ersten Position zumindest der Endbereich des Blockierelements in einer Ebene unter- oder oberhalb des Schieberelements angeordnet ist.

Ganz besonders bevorzugt ist eine Ausgestaltung des Blockierelements, bei der dieses einen stiftförmigen, der Arretierung des Schieberelements dienenden Bereich aufweist und vorzugsweise auf der dem Endbereich gegenüberliegenden Seite in einer Drehachse schwenkbar angeordnet ist.

Ein besonders kompakter Aufbau der Werkzeugmaschine im Bereich der Werkzeugwechseleinrichtung wird erzielt, wenn der stiftförmige Bereich des Blockierelements in der ersten Position parallel zum Schieberelement ausgerichtet ist, derart, dass das Schieberelement neben dem stiftförmigen Bereich des Blockierelements angeordnet ist.

Die eigentliche Verstellung des Blockierelements wird dadurch erzielt, dass das Bedienelement in einer Richtung parallel zur Antriebsachse der Werkzeugaufnahme längsverschiebbar angeordnet ist und ein Übertragungselement aufweist, das mit dem Blockierelement zumindest mittelbar zusammenwirkt.

Um ein Verschwenken des Blockierelements zu bewirken, ist es darüber hinaus vorgesehen, dass ein vorzugsweise dem Schieberelement abgewandter Endbereich des Übertragungselements zum Verstellen des Blockierelements mit einem am Blockierelement angeordneten Schaltelement zusammenwirkt, wobei der Endbereich und/oder das Schaltelement einander zugewandte und miteinander zusammenwirkende Kontaktflächen aufweisen, die schräg zur Antriebsachse der Werkzeugaufnahme angeordnet sind und beim aneinander Vorbeibewegen eine Kraft auf das Blockierelement erzeugen, die eine Verstellung des Blockierelements von der zweiten in die erste Position bewirkt.

Um ein Vorbeibewegen des Schieberelements an dem Schaltelement zu ermöglichen, so dass ein möglichst kompakter Aufbau der Werkzeugwechseleinrichtung ermöglicht wird, wird darüber hinaus vorgeschlagen, dass das Schaltelement in einem etwa mittleren Bereich des stiftförmigen Blockierelements angeordnet ist und eine Ausnehmung, vorzugsweise in Form eines Durchbruchs, aufweist, durch die das Schieberelement bei seiner Bewegung zwischen den beiden Positionen hindurchführbar ist.

Um eine sichere und definierte Lage des Blockierelements in der zweiten Position des Schieberelements zu bewirken, wird darüber hinaus vorgeschlagen, dass das Blockierelement in Wirkverbindung mit einem vorzugsweise als Druckfeder ausgebildeten Rückstellelement zusammenwirkt, das das Blockierelement in Richtung der ersten Position kraftbeaufschlagt.

Um die Bewegungen des Bedienelements zur Verstellung des Blockierelements einerseits und zur Verstellung des Schieberelements andererseits zu trennen, wird darüber hinaus in konstruktiv bevorzugter Ausgestaltung vorgeschlagen, dass das Bedienelement in einer Führungsplatte angeordnet ist, die einen Längsschlitz mit zwei Endanschlägen aufweist, innerhalb derer das Bedienelement zum Verstellen des Blockierelements in die zweite Position um einen Verschiebeweg bewegbar ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine erfindungsgemäße Werkzeugmaschine während ihres Normalbetriebs zum Antreiben eines Werkzeugs in einer Werkzeugaufnahme in einem vereinfachten Längsschnitt,
- Fig. 2: die Werkzeugmaschine gemäß Fig. 1 beim Einleiten eines Werkzeugwechsels, ebenfalls im vereinfachten Längsschnitt und
- Fig. 3: die Werkzeugmaschine gemäß den Fig. 1 und 2 in einer Stellung, bei der ein Werkzeug aus einem Werkzeugwechselmagazin entnommen bzw. wieder darin eingeführt werden kann, im vereinfachten Längsschnitt.

Gleiche Bauteile bzw. Bauteile mit gleicher Funktion sind in den Figuren mit den gleichen Bezugsziffern versehen.

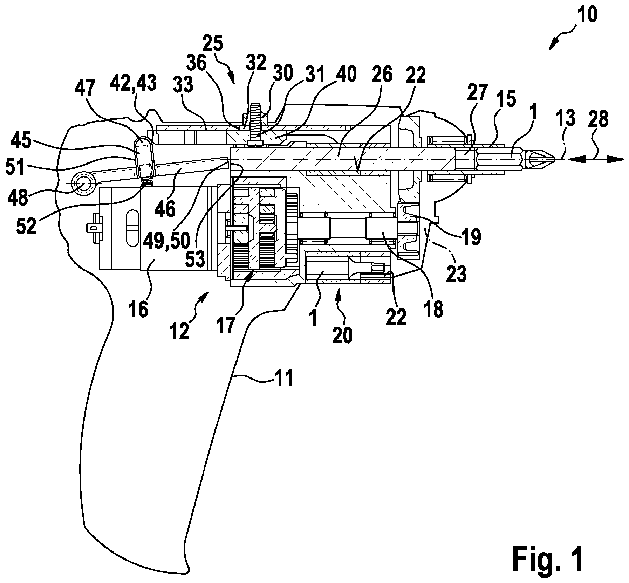

In den Fig. 1 bis 3 ist eine erfindungsgemäße Werkzeugmaschine 10 in Form eines Akkuschraubers dargestellt. Die als Handwerkzeugmaschine ausgebildete Werkzeugmaschine 10 weist eine pistolenförmige Grundform auf, in deren Gehäuse 11 eine Antriebseinheit 12 zum Antreiben bzw. Drehen eines Werkzeugs 1 in einer eine Längsachse 13 aufweisenden Werkzeugaufnahme 15 angeordnet ist. Die Antriebseinheit 12 umfasst hierzu einen als Elektromotor ausgebildeten Antriebsmotor 16, der vorzugsweise mittels eines nicht dargestellten Akkumulators betrieben wird. Der Antriebsmotor 16 ist auf der der Werkzeugaufnahme 15 zugewandten Seite mit einem Getriebe 17 gekoppelt, dessen Ausgangswelle 18 ein Zwischengetriebe 19 antreibt, das wiederum mit der Werkzeugaufnahme 15 gekoppelt ist.

Im Bereich der Ausgangswelle 18 ist ein trommelförmiges, aus der Unterseite des Gehäuses 11 teilweise herausragendes Werkzeugwechselmagazin 20 angeordnet, an dessen Umfang, vorzugsweise in gleichgroßen Winkelabständen, Werkzeugkammern 22 angeordnet sind, in denen jeweils ein Werkzeug 1 aufgenommen ist. Die Werkzeugkammern 22 sind an ihren einander gegenüberliegenden Stirnseiten offen ausgebildet, und das Werkzeugwechselmagazin 20 ist um die Drehachse 23 der Ausgangswelle 18 drehbar angeordnet. Zum Werkzeugtausch in bzw. aus der Werkzeugaufnahme 15 sind die Werkzeugkammern 22 des Werkzeugwechselmagazins 20 in eine Drehlage verschwenkbar, in der die betreffende Werkzeugkammer 22 mit der Längsachse 13 der Werkzeugaufnahme 15 fluchtet.

Eine soweit beschriebene Werkzeugmaschine ist aus der DE 10 2006 059 688 A1 der Anmelderin bekannt, so dass bezüglich weiterer Details des Aufbaus auf diese Anmeldung verwiesen wird, die insofern Bestandteil der vorliegenden Anmeldung sein soll.

Das Überführen eines Werkzeugs 1 aus einer Werkzeugkammer 22 in die Werkzeugaufnahme 15 sowie das Zurückführen eines Werkzeugs 1 aus der Werkzeugaufnahme 15 in die Werkzeugkammer 22 erfolgt mittels einer Werkzeugwechseleinrichtung 25. Die Werkzeugwechseleinrichtung 25 umfasst ein stiftförmiges Schieberelement 26, dessen dem Werkzeug 1 zugewandter Endbereich 27 insbesondere magnetisch ausgebildet sein kann, wobei das Schieberelement 26 in der in der Fig. 1 dargestellten Betriebsstellung ein Gegenlager für das Werkzeug 1 ausbildet, um beispielsweise axiale Schraubkräfte abzustützen bzw. in das Gehäuse 11 einzuleiten. Das Schieberelement 26 fluchtend zur Längsachse 13 in Richtung des Doppelpfeils 28 bewegbar. Hierzu ist das Schieberelement 26 mit einem an der Gehäuseoberseite angeordneten und von außen von einem Bediener greifbaren Bedienelement 30 gekoppelt, wobei das als Bedienknopf ausgebildete Bedienelement 30 ebenfalls in Richtung des Doppelpfeils 28 beweglich ist.

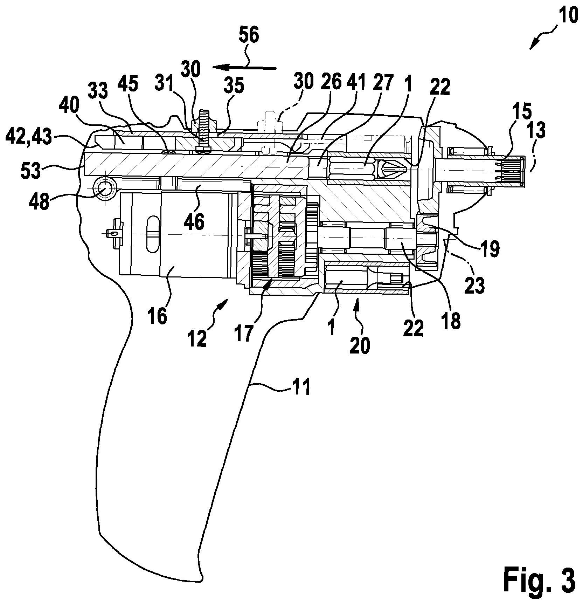

Das Bedienelement 30 weist in Richtung des Innenraums des Gehäuses 11 einen stiftförmigen Fortsatz 31 auf, der einen Längsschlitz 32 in einer Führungsplatte 33 durchdringt. Der Längsschlitz 32 weist in paralleler Ausrichtung mit der Längsachse 13 einen vorderen Endanschlag 35 und einen hinteren Endanschlag 36 auf, wie aus einer Zusammenschau der Fig. 1 und 3 erkennbar ist. Der Fortsatz 31 ist auf der dem Bedienelement 30 gegenüberliegenden Seite der Führungsplatte 33 mit einem beispielhaft stiftförmigen, als Verstellelement wirkenden Übertragungselement 40 verbunden, das wiederum mit dem Schieberelement 26 insbesondere durch eine Formschlussgeometrie gekoppelt ist, wobei zwischen dem Übertragungselement 40 und dem Schieberelement 26 in Richtung des Doppelpfeils 28 ein Bewegungsspiel ausgebildet ist.

Die Führungsplatte 33 ist in einer im Detail nicht näher dargestellten Führung 41 des Gehäuses 11 ebenfalls in Richtung des Doppelpfeils 28 verschiebbar angeordnet. Das unmittelbar unter der Führungsplatte 33 angeordnete Übertragungselement 40 weist auf der der Werkzeugaufnahme 15 gegenüberliegenden Seite einen Endbereich 42 mit einer schräg angeordneten, eine erste Kontaktfläche ausbildenden Kante 43 auf. Der Endbereich 42 wirkt mit einem stiftförmigen Schaltelement 45 zusammen. Das Schaltelement 45 ist in einem in etwa mittleren Abschnitt eines stiftförmigen Blockierelements 46 angeordnet und mit diesem verbunden. Das Schaltelement 45 weist auf der dem Endbereich 42 zugewandten Seite eine gerundet ausgebildete, eine zweite Kontaktfläche ausbildende Kuppe 47 auf.

Das Blockierelement 46 ist in seinem der Werkzeugaufnahme 15 abgewandten Endbereich in einer Drehachse 48 im Gehäuse 11 schwenkbar gelagert, wobei die Drehachse 48 beispielhaft axial hinter dem Antriebsmotor 16 und knapp oberhalb von diesem angeordnet ist. In der in der Fig. 1 dargestellten Betriebsstellung der Werkzeugmaschine 10 bildet der der Drehachse 48 gegenüberliegende Endbereich 49 mit seiner dem Schieberelement 26 zugewandten Stirnseite 50 ein Widerlager bzw. eine Anlagefläche für das Schieberelement 26 aus. Weiterhin weist das Schaltelement 45 eine Ausnehmung in Form eines Durchbruchs 51 auf, dessen Querschnitt bzw. deren Form dem Querschnitt bzw. der Form des Schieberelements 26 angepasst ist, derart, dass das Schieberelement 26 durch den Durchbruch 51 des Übertragungselements 45 hindurchführbar ist.

Vorzugsweise auf der dem Schaltelement 45 gegenüberliegenden Seite des Blockierelements 46 ist ein Rückstellelement in Form einer Druckfeder 52 angeordnet, die das Blockierelement 46 in eine Position kraftbeaufschlagt, in der die Stirnseite 50 des Blockierelements 46 mit der dem Blockierelement 46 zugewandten Stirnseite 53 des Schieberelements 26 zusammenwirkt.

In der Fig. 1 ist die eine Position, die Betriebsstellung der Werkzeugmaschine 10 dargestellt, bei der ein Werkzeug 1, beispielsweise ein Bit-Schraubeinsatz, über den Antriebsmotor 16 bzw. die Werkzeugaufnahme 15 gedreht werden kann. In dieser Position des Schieberelements 26 liegt dessen Stirnseite 50 an der Stirnseite 53 des Schieberelements 26 an, so dass eine in der einen Richtung des Doppelpfeils 28 in Richtung des Gehäuses 11 wirkende Druckkraft auf das Werkzeug 1, von dem Werkzeug 1 auf das Schieberelement 26, und von diesem wiederum über das Blockierelement 46 auf die Lagerung des Blockierelements 46 im Bereich der Drehachse 48 in das Gehäuse 11 der Werkzeugmaschine 10 eingeleitet wird.

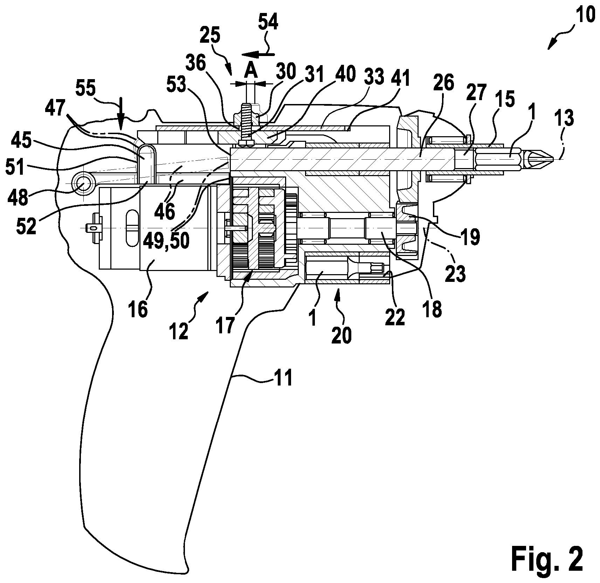

Zum Starten eines Werkzeugwechsels wird entsprechend der Fig. 2 das Bedienelement 30 zunächst um einen Verschiebeweg A, der dem Abstand zwischen den beiden Endanschlägen 35, 36 entspricht, in Richtung des Pfeils 54 bewegt, was zur Folge hat, dass das Übertragungselement 40 sich ebenfalls in Richtung des Pfeils 54 bewegt, während das Schieberelement 26 zunächst noch in seiner ursprünglichen Position verbleibt. Durch die Bewegung des Übertragungselements 40 wird das Schaltelement 45 des Blockierelements 46 von der Kante 43 des Übertragungselements 40 entgegen der Federkraft der Druckfeder 52 in Richtung des Pfeils 55 nach unten gedrückt, derart, dass die Stirnseite 50 des Blockierelements 46 außer Kontakt mit der Stirnseite 53 des Schieberelements 26 gelangt. Im Endzustand, in der das Schieberelement 26 seine andere (End-) Position einnimmt, ist das Blockierelement 46 in einer Ebene unterhalb des Schieberelements 26 angeordnet. In diesem Zustand ist es möglich, das Schieberelement 26, zusammen mit dem entsprechenden Werkzeug 1, aus der Werkzeugaufnahme 15 herauszuziehen und in die Werkzeugkammer 22 einzuführen. Dies erfolgt dadurch, dass das Bedienelement 30 entsprechend der Fig. 3 in Richtung des Pfeils 56 bewegt wird, wodurch sowohl das Übertragungselement 40 als auch das Schieberelement 46 von der Werkzeugaufnahme 15 wegbewegt werden. Wesentlich dabei ist, dass bei der Bewegung des Schieberelements 26 dieses durch den Durchbruch 51 des Übertragungselements 45 geführt werden kann.

In der in der Fig. 3 dargestellten Position des Schieberelements 26 ist das Werkzeug 1 innerhalb seiner Werkzeugkammer 22 angeordnet. In dieser Position kann das Werkzeugwechselmagazin 20 durch Drehung um die Drehachse 23 durch den Bediener gedreht werden, um ein anderes Werkzeug 1 mit dem Schieberelement 26 auszurichten. Sobald dies erfolgt ist, kann durch eine entsprechende Bewegung des Bedienelements 30 entgegen der Richtung des Pfeils 56 das Werkzeug 1 in die Werkzeugaufnahme 15 überführt werden. Dabei wird mittels der Druckfeder 52 das Blockierelement 46 wieder in seine das Schieberelement 26 blockierende Stellung gebracht, sobald entsprechend der Fig. 1 der Endbereich 42 des Übertragungselements 40 an dem Schaltelement 45 vorbeibewegt wurde.

Die soweit beschriebene Werkzeugmaschine 10 kann in vielfältiger Art und Weise abgewandelt bzw. modifiziert werden, ohne vom Erfindungsgedanken abzuweichen. Insbesondere ist der Einsatz der Werkzeugmaschine 10 nicht auf einen Akkuschrauber begrenzt, und die Ausgestaltung des Bedienelements 30, des Blockierelements 46 und des Übertragungselements 40 sowie dessen Betätigung über das Bedienelement 30 kann konstruktiv von der dargestellten Ausführungsform unterschiedlich ausgebildet sein.

## Patentansprüche

1. Motorisch betriebene Werkzeugmaschine (10), insbesondere Handwerkzeugmaschine mit drehbar anzutreibendem Werkzeug (1), mit einer Antriebseinheit (12) und einem Werkzeugwechselmagazin (20), dessen Werkzeugkammern (22) jeweils in eine Übergabelage an eine zu bestückende Werkzeugaufnahme (15) verstellbar sind, wobei eine Werkzeugwechseleinrichtung (25) vorgesehen ist, die ein in Wirkverbindung mit einem Werkzeug (1) angeordnetes, in Längsrichtung mit einer Antriebsachse (13) der Werkzeugaufnahme (15) angeordnetes Schieberelement (26) aufweist, das von einem Bedienelement (30) in zumindest eine erste Position zur Übernahme und Übergabe eines Werkzeugs (1) aus bzw. in die jeweilige Werkzeugkammer (22) und in eine zweite Position verstellbar ist, wobei die zweite Position eine Betriebsstellung des Werkzeugs (1) ist, in der das Werkzeug (1) von der Werkzeugaufnahme (15) antreibbar ist, und wobei das Schieberelement (26) in der zweiten Position mittels eines Blockierelements (46) festsetzbar ist, das zur Verstellung von der zweiten in die erste Position mittels eines Übertragungselements (40) außer Wirkverbindung mit dem Schieberelement (26) verstellbar ist,
**dadurch gekennzeichnet,**
**dass** das Schieberelement (26) zum Verstellen des Blockierelements (46) mittels des Übertragungselements (40) in zumindest mittelbarem Anlagekontakt mit dem Blockierelement (46) angeordnet ist.

2. Werkzeugmaschine nach Anspruch 1,
**dadurch gekennzeichnet,**
**dass** das Übertragungselement (40) zur Verstellung von der zweiten in die erste Position in Wirkverbindung mit dem Bedienelement (30) steht.

3. Werkzeugmaschine nach einem der Ansprüche 1 oder 2,
**dadurch gekennzeichnet,**
**dass** das Blockierelement (46) einen dem Schieberelement (26) zugewandten Endbereich (49) aufweist, der in der zweiten Position gegen das Schieberelement (26), vorzugsweise gegen die dem Blockierelement (46) zugewandte Stirnseite (53) des Schieberelements (26), anliegt.

4. Werkzeugmaschine nach einem der vorhergehenden Ansprüche,
**dadurch gekennzeichnet,**
**dass** das Blockierelement (46) zum Verstellen von der zweiten Position in die erste Position und umgekehrt positionsveränderbar angeordnet ist, derart, dass in der ersten Position zumindest der Endbereich (49) des Blockierelements (46) in einer Ebene unter- oder oberhalb des Schieberelements (26) angeordnet ist.

5. Werkzeugmaschine nach einem der vorhergehenden Ansprüche,
**dadurch gekennzeichnet,**
**dass** das Blockierelement (46) einen stiftförmigen, der Arretierung des Schieberelements (26) dienenden Bereich aufweist und vorzugsweise auf der dem Endbereich (49) gegenüberliegenden Seite in einer Drehachse (48) schwenkbar angeordnet ist.

6. Werkzeugmaschine nach einem der vorhergehenden Ansprüche,
**dadurch gekennzeichnet,**
**dass** der stiftförmige Bereich des Blockierelements (46) in der ersten Position parallel zum Schieberelement (26) ausgerichtet ist, derart, dass das Schieberelement (26) neben dem stiftförmigen Bereich des Blockierelements (46) angeordnet ist.

7. Werkzeugmaschine einem der vorhergehenden Ansprüche,
**dadurch gekennzeichnet,**
**dass** das Bedienelement (30) in einer Richtung parallel zur Antriebsachse (13) der Werkzeugaufnahme (15) längsverschiebbar angeordnet ist und ein Übertragungselement (40) aufweist, das mit dem Blockierelement (46) zumindest mittelbar zusammenwirkt.

8. Werkzeugmaschine einem der vorhergehenden Ansprüche,
**dadurch gekennzeichnet,**
**dass** ein vorzugsweise dem Schieberelement (26) abgewandter Endbereich (42) des Übertragungselements (40) zum Verstellen des Blockierelements (46) mit einem am Blockierelement (46) angeordneten Schaltelement (45) zusammenwirkt, wobei der Endbereich (42) und/oder das Schaltelement (45) einander zugewandte und miteinander zusammenwirkende Kontaktflächen (43, 47) aufweisen, die schräg zur Antriebsachse (13) der Werkzeugaufnahme (15) angeordnet sind und beim aneinander Vorbeibewegen eine Kraft auf das Blockierelement (46) erzeugen, die eine Verstellung des Blockierelements (46) von der zweiten in die erste Position bewirkt.

9. Werkzeugmaschine einem der vorhergehenden Ansprüche,
**dadurch gekennzeichnet,**
**dass** das Schaltelement (45) in einem in etwa mittleren Bereich des stiftförmigen Blockierelements (46) angeordnet ist und eine Ausnehmung, vorzugsweise in Form eines Durchbruchs (51) aufweist, durch die das Schieberelement (26) bei seiner Bewegung zwischen den beiden Positionen hindurchführbar ist.

10. Werkzeugmaschine einem der vorhergehenden Ansprüche,
**dadurch gekennzeichnet,**
**dass** das Blockierelement (46) in Wirkverbindung mit einem vorzugsweise als Druckfeder (52) ausgebildeten Rückstellelement zusammenwirkt, das das Blockierelement (46) in Richtung der ersten Position kraftbeaufschlagt.

11. Werkzeugmaschine einem der vorhergehenden Ansprüche,
**dadurch gekennzeichnet,**
**dass** das Bedienelement (30) in einer Führungsplatte (33) angeordnet ist, die einen Längsschlitz (32) mit zwei Endanschlägen (35, 36) aufweist, innerhalb derer das Bedienelement (30) zum Verstellen des Blockierelements (46) in die zweite Position um einen Verschiebeweg (A) bewegbar ist.

## Claims

1. Motor-powered power tool (10), in particular a portable power tool having a tool (1) to be driven in rotation, having a drive unit (12) and a tool change magazine (20), the tool chambers (22) of which are each adjustable into a position for transferring to a tool receptacle (15) to be equipped, wherein provision is made of a tool change device (25) which has a slider element (26) which is arranged in operative connection with a tool (1), is arranged in the longitudinal direction together with a drive axis (13) of the tool receptacle (15), and is adjustable by an operating element (30) into at least one first position for receiving and transferring a tool (1) from and, respectively, into the respective tool chamber (22) and is adjustable into a second position, wherein the second position is an operating position of the tool (1), in which the tool (1) is drivable by the tool receptacle (15), and wherein the slider element (26) is fixable in the second position by means of a blocking element (46) which is adjustable by means of a transmission element (40) operatively disconnected from the slider element (26) in order to adjust from the second position into the first position,
**characterized**
**in that** the slider element (26) is arranged in at least indirect contact with the blocking element (46) in order to adjust the blocking element (46) by means of the transmission element (40).

2. Power tool according to Claim 1,
**characterized**
**in that** the transmission element (40) is operatively connected to the operating element (30) in order to adjust from the second position into the first position.

3. Power tool according to either of Claims 1 and 2,
**characterized**
**in that** the blocking element (46) has an end region (49) facing the slider element (26), said end region (49) bearing in the second position against the slider element (26), preferably against that end side (53) of the slider element (26) that faces the blocking element (46).

4. Power tool according to one of the preceding claims,
**characterized**
**in that**, in order to adjust from the second position into the first position and vice versa, the blocking element (46) is arranged so as to be changeable in position, such that in the first position at least the end region (49) of the blocking element (46) is arranged in a plane below or above the slider element (26).

5. Power tool according to one of the preceding claims,
**characterized**
**in that** the blocking element (46) has a pin-shaped region that serves for locking the slider element (26), and preferably is arranged in a pivotable manner on a pivot (48) on the side opposite the end region (49).

6. Power tool according to one of the preceding claims,
**characterized**
**in that** the pin-shaped region of the blocking element (46) is oriented parallel to the slider element (26) in the first position, such that the slider element (26) is arranged alongside the pin-shaped region of the blocking element (46).

7. Power tool according to one of the preceding claims,
**characterized**
**in that** the operating element (30) is arranged in a longitudinally displaceable manner in a direction parallel to the drive axis (13) of the tool receptacle (15) and has a transmission element (40) which interacts at least indirectly with the blocking element (46).

8. Power tool according to one of the preceding claims,
**characterized**
**in that** an end region (42), preferably remote from the slider element (26), of the transmission element (40) interacts with a switching element (45) arranged on the blocking element (46) in order to adjust the blocking element (46), wherein the end region (42) and/or the switching element (45) have mutually facing contact surfaces (43, 47) that interact with one another and are arranged obliquely with respect to the drive axis (13) of the tool receptacle (15) and, when moving past one another, produce a force on the blocking element (46), said force effecting an adjustment of the blocking element (46) from the second position into the first position.

9. Power tool according to one of the preceding claims,
**characterized**
**in that** the switching element (45) is arranged in an approximately central region of the pin-shaped blocking element (46) and has a cutout, preferably in the form of an aperture (51), through which the slider element (26) is guidable as it moves between the two positions.

10. Power tool according to one of the preceding claims,
**characterized in that** the blocking element (46) interacts
in operative connection with a restoring element preferably in the form of a compression spring (52), which subjects the blocking element (46) to a force in order to move it in the direction of the first position.

11. Power tool according to one of the preceding claims,
**characterized**
**in that** the operating element (30) is arranged in a guide plate (33) which has a longitudinal slot (32) having two end stops (35, 36), within which the operating element (30) is movable into the second position along a displacement path (A) in order to adjust the blocking element (46).

## Revendications

1. Machine-outil motorisée (10), en particulier machine-outil portative à outil (1) devant être entraîné en rotation, comportant une unité d'entraînement (12) et un magasin de changement d'outil (20) dont les chambres d'outil (22) sont déplaçables respectivement dans une position de transfert à un logement d'outil (15) à garnir, dans laquelle un dispositif de changement d'outil (25) est prévu, lequel comprend un élément coulisseau (26) disposé en liaison fonctionnelle avec un outil (1) et disposé dans la direction longitudinale avec un axe d'entraînement (13) du logement d'outil (15), lequel élément coulisseau peut être déplacé par un élément de commande (30) dans au moins une première position pour la réception et le transfert d'un outil (1) à partir de la chambre d'outil respective (22) ou dans celle-ci et dans une deuxième position, dans laquelle la deuxième position est une position de fonctionnement de l'outil (1) dans laquelle l'outil (1) peut être entraîné par le logement d'outil (15), et dans laquelle l'élément coulisseau (26) peut être fixé dans la deuxième position au moyen d'un élément de blocage (46) qui, pour le déplacement de la deuxième à la première position, peut être déplacé au moyen d'un élément de transmission (40) hors de la liaison fonctionnelle avec l'élément coulisseau (26),
**caractérisée en ce que**
l'élément coulisseau (26) est disposé en contact d'appui au moins indirect avec l'élément de blocage (46) pour le déplacement de l'élément de blocage (46) au moyen de l'élément de transmission (40).

2. Machine-outil selon la revendication 1,
**caractérisée en ce que**
l'élément de transmission (40) est en liaison fonctionnelle avec l'élément de commande (30) pour le déplacement de la deuxième à la première position.

3. Machine-outil selon l'une des revendications 1 ou 2,
**caractérisée en ce que**
l'élément de blocage (46) comprend une région d'extrémité (49) tournée vers l'élément coulisseau (26), laquelle s'appuie contre l'élément coulisseau (26), de préférence contre le côté frontal (53) de l'élément coulisseau (26) tourné vers l'élément de blocage (46), dans la deuxième position.

4. Machine-outil selon l'une des revendications précédentes,
**caractérisée en ce que**
l'élément de blocage (46) est disposé de manière variable en position pour le déplacement de la deuxième position à la première position et inversement, de telle sorte que, dans la première position, au moins la région d'extrémité (49) de l'élément de blocage (46) est disposée dans un plan en dessous ou au-dessus de l'élément coulisseau (26).

5. Machine-outil selon l'une des revendications précédentes,
**caractérisée en ce que**
l'élément de blocage (46) comprend une région en forme de goupille servant au verrouillage de l'élément coulisseau (26) et est de préférence disposé de manière pivotante suivant un axe de rotation (48) sur le côté opposé à la région d'extrémité (49).

6. Machine-outil selon l'une des revendications précédentes,
**caractérisée en ce que**
la région en forme de goupille de l'élément de blocage (46) est orientée parallèlement à l'élément coulisseau (26) dans la première position, de telle sorte que l'élément coulisseau (26) est disposé à côté de la région en forme de goupille de l'élément de blocage (46).

7. Machine-outil selon l'une des revendications précédentes,
**caractérisée en ce que**
l'élément de commande (30) est disposé de manière déplaçable longitudinalement dans une direction parallèle à l'axe d'entraînement (13) du logement d'outil (15) et comprend un élément de transmission (40) qui coopère au moins indirectement avec l'élément de blocage (46) .

8. Machine-outil selon l'une des revendications précédentes,
**caractérisée en ce**
**qu'**une région d'extrémité (42) de l'élément de transmission (40) opposée à l'élément coulisseau (26) coopère avec un élément de commutation (45) disposé sur l'élément de blocage (46) pour le déplacement de l'élément de blocage (46), la région d'extrémité (42) et/ou l'élément de commutation (45) comprenant des surfaces de contact (43, 47) tournées l'une vers l'autre et coopérant l'une avec l'autre, lesquelles sont disposées de manière oblique par rapport à l'axe d'entraînement (13) du logement d'outil (15) et produisent une force sur l'élément de blocage (46) en cas de déplacement l'une devant l'autre, laquelle force provoque un déplacement de l'élément de blocage (46) de la deuxième à la première position.

9. Machine-outil selon l'une des revendications précédentes,
**caractérisée en ce que**
l'élément de commutation (45) est disposé dans une région approximativement centrale de l'élément de blocage (46) en forme de goupille et comprend un évidement, de préférence sous la forme d'un passage (51) à travers lequel l'élément coulisseau (26) peut être guidé lors de son déplacement entre les deux positions.

10. Machine-outil selon l'une des revendications précédentes,
**caractérisée en ce que**
l'élément de blocage (46) coopère en liaison fonctionnelle avec un élément de rappel réalisé de préférence comme ressort de compression (52), lequel élément de rappel soumet l'élément de blocage (46) à une force en direction de la première position.

11. Machine-outil selon l'une des revendications précédentes,
**caractérisée en ce que**
l'élément de commande (30) est disposé dans une plaque de guidage (33) qui comprend une fente longitudinale (32) dotée de deux butées de fin de course (35, 36) à l'intérieur desquelles l'élément de commande (30) est mobile sur un trajet de déplacement (A) pour le déplacement de l'élément de blocage (46) dans la deuxième position.
